# EUROPEAN PATENT APPLICATION

(11) **EP 3 447 236 A1**
(43) Date of publication of application: **27.02.2019**
(21) Application number: 18190224.8
(22) Date of filing: 22.08.2018
(51) Int. Cl.: E21B 33/035, E21B 41/00, E21B 17/20

(54) **SUBSEA FLOW ASSURANCE IN MULTIFUNCTIONAL PIPE-IN-PIPE SYSTEM**

(30) Priority: 25.08.2017 US 201715686725
(71) Applicant: OneSubsea IP UK Limited, London EC4V 6JA (GB)
(72) Inventor: ABU-ZEID, Hosam M., Houston, Texas 77041 (US); SANTIAGO, Alexi, The Woodlands, Texas 77382 (US); PETIT, Pierre, Houston, Texas 77041 (US); WILLIAMS, Deandrick, Katy, Texas 77449 (US)
(74) Representative: Schlumberger Intellectual Property Department

(57) **Abstract**

A technique provides for management of multiple flow assurance functionalities in a pipe-in-pipe system (36). A station (40) for use in a subsea pipe-in-pipe system (36) may comprise an inner flow conduit (50) to provide an inner flow passage (54) for a first fluid and an outer flow conduit (52) to provide an annular flow passage (56) for a second fluid. The station also may comprise a network of valves (80) and conduits coupled to the inner flow conduit (50) and to the outer flow conduitm (52). The valves are individually adjustable to enable selection of multiple flow assurance functionalities so as to ensure continued fluid flow capability following a plug (150). Depending on the parameters of a given application, a plurality of the stations (40) may be combined with a plurality of pipe-in-pipe sections to form a suitable subsea pipe-in-pipe system(36).

## Description

### CROSS REFERENCE PARAGRAPH

This application claims the benefit of U.S. Non-Provisional Application No. 15/686,725, entitled " SUBSEA FLOW ASSURANCE IN MULTIFUNCTIONAL PIPE-IN-PIPE SYSTEM," filed Aug. 25, 2017, the disclosure of which is hereby incorporated herein by reference.

### BACKGROUND

For subsea applications, hydrocarbon fluids such as oil and natural gas are obtained from a subterranean geologic formation, referred to as a reservoir, by drilling a well through a subsea wellhead system that penetrates the hydrocarbon-bearing geologic formation. In subsea applications, various types of infrastructure may be positioned along a sea floor and coupled by flow lines. The flow lines enable flow of production fluids, e.g. oil, gas, or other types of production fluids, from one subsea installation to another. Flow lines also may extend upwardly to various types of surface facilities, such as surface vessels or platforms.

To avoid costly downtime, assurance of fluid flow along the flow lines and through the subsea installations and other infrastructure is desired. A pipe-in-pipe system has been described in US 8,950,499 B2 as helping to ensure flow continues in subsea applications. Such a system facilitates removal of blockages and other detrimental effects which can limit flow through subsea flow lines. However, such systems have a variety of limitations such as limitations regarding performing functionalities in parallel to further assure continued flow.

### SUMMARY

In general, a system and methodology are provided for management of multiple flow assurance functionalities in a pipe-in-pipe system. According to an embodiment, a station comprises an inner flow conduit to provide an inner flow passage for a first fluid and an outer flow conduit to provide an annular flow passage for a second fluid. The station also comprises a network of valves and conduits coupled to the inner flow conduit and to the outer flow conduit. The valves are individually adjustable to enable management of the multiple flow assurance functionalities so as to ensure continued fluid flow capability following, for example, a plug. Depending on the parameters of a given application, a plurality of the stations may be combined with a plurality of pipe-in-pipe sections to form an overall subsea pipe-in-pipe system.

However, many modifications are possible without materially departing from the teachings of this disclosure. Accordingly, such modifications are intended to be included within the scope of this disclosure as defined in the claims.

### BRIEF DESCRIPTION OF THE DRAWINGS

Certain embodiments of the disclosure will hereafter be described with reference to the accompanying drawings, wherein like reference numerals denote like elements. It should be understood, however, that the accompanying figures illustrate the various implementations described herein and are not meant to limit the scope of various technologies described herein, and:
Figure 1 is a schematic illustration of an example of a subsea well system having a pipe-in-pipe system, according to an embodiment of the disclosure;
Figure 2 is an illustration of a portion of a subsea system having a pipe-in-pipe system coupled with flow control stations, according to an embodiment of the disclosure;
Figure 3 is a schematic illustration of an example of a flow arrangement of one of the flow control stations illustrated in Figure 2, according to an embodiment of the disclosure;
Figure 4 is an illustration of a pipe-in-pipe system coupled with flow control stations similar to that of Figure 2 but in a different operational configuration, according to an embodiment of the disclosure;
Figure 5 is a schematic illustration of an example of a flow arrangement of flow control stations illustrated in Figure 4, according to an embodiment of the disclosure;
Figure 6 is an illustration of a pipe-in-pipe system coupled with flow control stations similar to that of Figure 2 but in a different operational configuration, according to an embodiment of the disclosure;
Figure 7 is a schematic illustration of an example of a flow arrangement of flow control stations illustrated in Figure 6, according to an embodiment of the disclosure;
Figure 8 is an illustration of a pipe-in-pipe system coupled with flow control stations similar to that of Figure 2 but in a different operational configuration, according to an embodiment of the disclosure;
Figure 9 is a schematic illustration of an example of a flow arrangement of flow control stations illustrated in Figure 8, according to an embodiment of the disclosure.

### DETAILED DESCRIPTION

In the following description, numerous details are set forth to provide an understanding of some embodiments of the present disclosure. However, it will be understood by those of ordinary skill in the art that the system and/or methodology may be practiced without these details and that numerous variations or modifications from the described embodiments may be possible.

The present disclosure generally relates to a system and methodology which facilitate flow assurance management in multifunctional pipe-in-pipe systems used in subsea applications. The multifunctional pipe-in-pipe techniques described herein utilize a unique flow loop arrangement of piping, valves, and sensors which enable various flow functions to be performed in parallel. In some embodiments, the system and methodology provide a flow assurance management loop combined with the ability to detect, isolate, mitigate, remediate where desired, and manage flow assurance problems in the pipe-in-pipe system while enabling the transport of different types of fluids. Additionally, multiple flow assurance management tasks may be performed simultaneously.

According to an embodiment, the pipe-in-pipe system utilizes a flow assurance management loop which detects a developing flow assurance problem through a set of sensors arranged, for example, at a pipe-in-pipe connection loop. The sensors enable monitoring of fluid properties, e.g. production and/or injection fluid properties, in both the annulus and the bore of the pipe-in-pipe system. Upon detecting a deviation from a normal operating limit (thus indicating a potential flow assurance problem), the appropriate sensor or sensors provide a signal to a control unit (and/or operator) which is then able to control valves in one or more stations of the overall pipe-in-pipe system. If a hydrate formation occurs, for example, valves on two sides of the affected pipe can be closed to isolate the hydrate formation in the bore of the pipe. Corrective action can then be taken. For example, valves on a circulation loop can be opened to allow circulation of hot fluids into an annulus around the pipe plugged by the hydrate formation, thus dissolving the hydrate plug. In parallel to this procedure, chemicals may be injected when and where desired to help remedy the problem, e.g. to help dissolve the hydrate formation/plug.

In some applications, the flow assurance management loop provided by the pipe-in-pipe system also may be used to provide gas lift at connection points of the pipe-in-pipe system. The system also may provide set plugs or other features to isolate affected sections to, for example, prevent leaking into the environment and to prepare a section of pipe for removal. Additionally, the multifunctional pipe-in-pipe system may provide connections on both sides of each station to enable connection of independent, removable pipes across the stations for both the annulus flows and the bore flows.

In some embodiments, the flow assurance management loop also provides an access point so flow may be diverted to a sampling flow line to allow extraction of a fluid sample. This type of system enables intermittent connection for a more cost effective extraction of samples.

Additionally, the stations of the overall pipe-in-pipe system may be powered electrically, hydraulically, and/or through other techniques for providing power to certain system components. For example, power may be provided through local batteries, a power cable, an umbilical connection, a remotely operated vehicle (ROV), or other suitable power sources. Examples of other power source options include use of energy from sea currents or use of thermal energy derived from temperature variance between warm surface water and cold deep water.

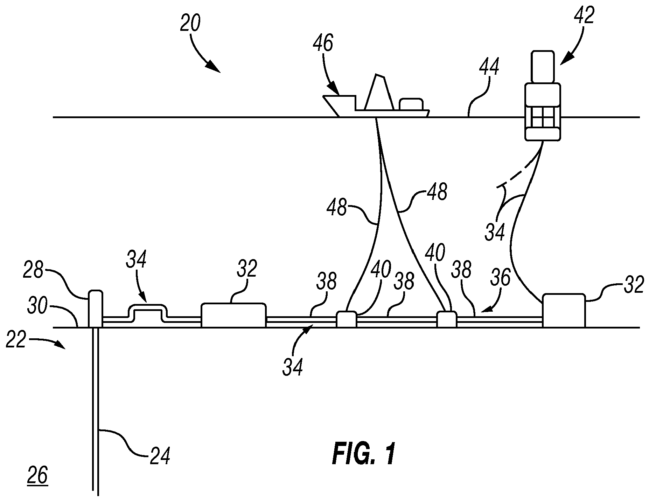

Referring generally to Figure 1, an example of a subsea system 20 is illustrated. In this embodiment, the subsea system 20 may be used in a variety of subsea well applications, e.g. subsea hydrocarbon production operations and/or injection operations. Depending on the parameters of a given subsea operation, the subsea system 20 may comprise a variety of different types of components.

By way of example, the subsea system 20 may comprise at least one well 22 having a wellbore 24 extending into a subsea geologic formation 26. An upper end of the wellbore 24 is in fluid communication with a wellhead installation 28 positioned proximate a sea floor 30. The wellhead installation 28 may be coupled with other subsea installations 32 via suitable flow lines 34. Examples of subsea installations 32 include pipeline end manifolds (PLEM) and other types of subsea manifolds, pipeline end terminations (PLET), umbilical termination units, tie-in structures, and various other types of subsea installations 32. The flow lines 34 may comprise pipelines, jumpers, and various other types of flow lines for enabling flow of production fluids, injection fluids, or other fluids.

In the embodiment illustrated, certain flow lines 34 are embodied in a multifunction pipe-in-pipe system 36 having pipe-in-pipe sections 38 coupled with flow control stations 40 which enable the multifunction capability for addressing flow problems and for dealing with other flow assurance issues. Additionally, certain flow lines 34 may be connected between at least one of the subsea installations 32 and at least one surface facility 42, e.g. a surface vessel or surface platform, located at a sea surface 44. In the example illustrated, an intervention vessel 46 also is coupled with flow control stations 40 via intervention flow lines 48. It should be noted the types of components and arrangements of components of subsea system 20 may vary substantially depending on the desired subsea infrastructure for a given operation.

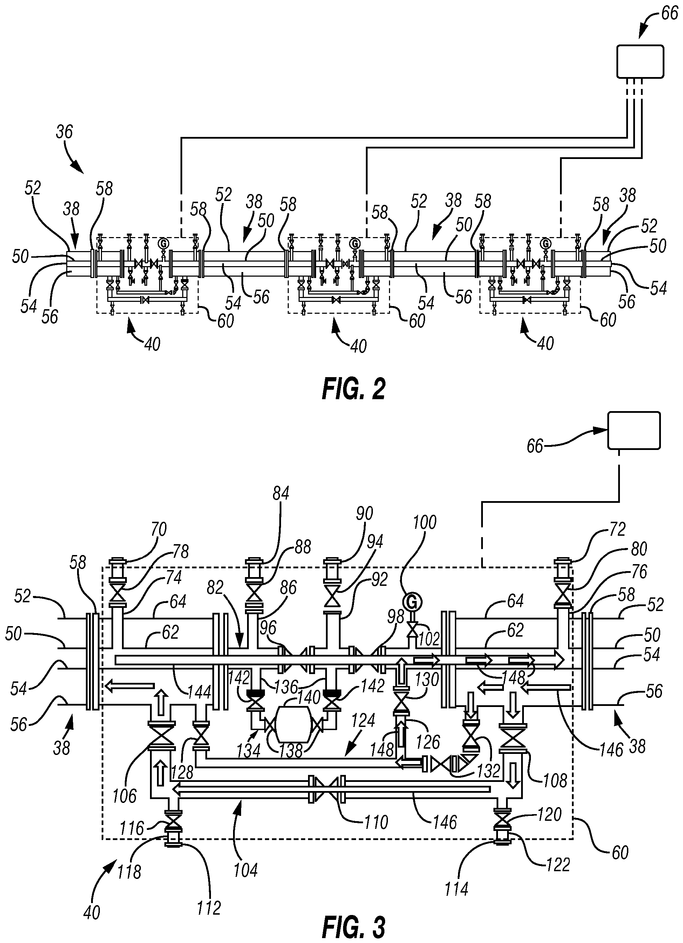

Referring generally to Figure 2, an example of the multifunction pipe-in-pipe system 36 is illustrated as having a plurality of pipe-in-pipe sections 38 connected between a plurality of flow control stations 40. In this embodiment, each pipe-in-pipe section 38 comprises an inner pipe 50 disposed within an outer pipe 52. The hollow interior of the inner pipe 50 provides a flow path for flow of fluid along an inner flow passage 54. Additionally, the outer pipe 52 is positioned to create space between the interior of the outer pipe 52 and the exterior of the inner pipe 50 so as to provide a flow path for flow of fluid along an annular flow passage 56. In some embodiments, the inner pipe 50 and outer pipe 52 may be concentrically positioned. The inner flow passage 54 may be routed through the pipe-in-pipe sections 38 and stations 40 to carry a bore flow while the annular flow passage 56 may be routed through the pipe-in-pipe sections 38 and stations 40 to carry an annulus flow.

As illustrated, the pipe-in-pipe sections 38 may be sealably coupled with corresponding flow control stations 40 via couplers 58. The couplers 58 may be in the form of insertion couplers with seals, flange-type couplers, or other suitable couplers able to form suitable seals to maintain separation of the inner flow passage 54 and surrounding annular flow passage 56 as fluids pass between pipe-in-pipe sections 38 and corresponding stations 40. According to some embodiments, each flow control station 40 may comprise various components mounted on a skid 60 which may be located on sea floor 30 or at other suitable subsea locations for a given operation.

With additional reference to Figure 3, each station 40 may comprise various arrangements of flow passages, valves, and other components to establish a flow assurance management loop for controlling flows of fluids, e.g. flows of differing fluids. Each station 40 may comprise an inner flow conduit 62 and an outer flow conduit 64 fluidly coupled with inner pipe 50 and outer pipe 52, respectively, via the corresponding coupler 58. In the example illustrated, separate sides of station 40 each comprise one of the inner flow conduit 62 and one of the outer flow conduit 64 to enable coupling of two pipe-in-pipe sections 38 to the illustrated station 40. The inner flow conduit 62 and outer flow conduit 64 work in cooperation with the inner pipe 50 and outer pipe 52 to maintain the overall inner flow passage 54 and annular flow passage 56 along the pipe-in-pipe system 36. As explained in greater detail below, the various valves and other components of each station 40 enable control over flow of fluids between the separate sides of each station 40 and thus between the corresponding inner flow conduit 62 and the outer flow conduits 64 of each station 40.

It should be noted that various types of control systems 66 may be coupled with each station 40 to enable control over the various controllable components, e.g. valves, of each station 40. Depending on the configuration of these components, a given control system 66 may be a hydraulic control system, electric control system, and/or other suitable type of control system.

Referring again to Figure 3, the illustrated embodiment of station 40 further comprises a plurality of conduits, valves, and other components. For purposes of description, at least some of these components will be described as left side or right side components with respect to the illustrated station 40. However, use of the terms left and right is for the purpose of explanation and those terms should not be construed as limiting with respect to positioning of such components in station 40. For example, some of the components described may be reversed or positioned at different relative locations on station 40.

In the illustrated example, station 40 comprises a left side connection 70 and a right side connection 72. The left side connection 70 is in fluid communication with the inner flow conduit 62 via conduit 74 on one side of station 40, and right side connection 72 is in fluid communication with the other inner flow conduit 62 via conduit 76 on a different side, e.g. opposite side, of station 40. A valve device 78 may be disposed along conduit 74 and a valve device 80 may be disposed along conduit 76 to enable control over flow through the respective conduits.

According to the illustrated example, the two inner flow conduits 62 may be placed in fluid communication with each other via a connector conduit 82 which forms part of inner flow passage 54 in the illustrated arrangement. A chemical injection connection 84 may be placed in fluid communication with the connector conduit 82 via conduit 86, and flow along conduit 86 may be controlled via a valve 88. Similarly, a bypass connection 90 may be placed in fluid communication with the connector conduit 82 via conduit 92, and flow along conduit 92 may be controlled via a corresponding valve 94. Furthermore, isolation valves, such as the illustrated pair of isolation valves 96, 98, may be located along connector conduit 82 to enable control over different fluid flows along connector conduit 82. In some embodiments, at least one sensor 100, e.g. a pressure and temperature gauge, may be operatively connected to the connector conduit 82 across a valve 102. The sensors 100 throughout the pipe-in-pipe system 36 effectively enable monitoring of flow along desired flow assurance management flow loops through the system.

With additional reference to the embodiment illustrated in Figure 3, the station 40 may further comprise a primary annulus bypass conduit 104 in fluid communication with each of the two outer flow conduits 64. As illustrated, a left annulus isolation valve 106, a right annulus isolation valve 108, and an intermediate annulus isolation valve 110 are placed along the primary annulus bypass conduit 104. Additionally, a left side connection 112 may be in fluid communication with the primary annulus bypass conduit 104 between isolation valve 106 and isolation valve 110. A right side connection 114 may be in fluid communication with the primary annulus bypass conduit 104 between isolation valve 108 and isolation valve 110. A valve 116 may be disposed along a conduit 118 extending from the left side connection 112 to the bypass conduit 104 and, similarly, a valve 120 may be disposed along a conduit 122 extending from the right side connection 114 to the bypass conduit 104.

Additionally, a secondary bypass conduit 124 in fluid communication with each of the two outer flow conduits 64 and with an additional offshoot conduit 126 in fluid communication with inner connector conduit 82. Inner connector conduit 82 is a continuation of inner flow conduits 62. According to the embodiment illustrated, a valve 128 is disposed along secondary bypass conduit 124 to provide an annulus to inner flow passage flush connection. Furthermore, an isolation valve 130 may be disposed along offshoot conduit 126, and at least one gas lift injection valve 132 may be positioned on an opposite side of offshoot conduit 126 relative to valve 128 as illustrated.

In some embodiments, the station 40 may include a production sample arrangement 134. As illustrated, the production sample arrangement 134 may be comprised of a conduit 136 in fluid communication with inner connector conduit 82 across valve 96. The conduit 136 may be connected with couplers 138 for receiving a sample container 140. In some embodiments, the couplers 138 may comprise valves. Additionally, valves 142 may be positioned along conduit 136 on opposite sides of the region for receiving sample container 140.

According to an operational example, normal operation of the pipe-in-pipe system 36 enables an independent flow of fluid along each of the inner flow passage 54 (a bore flow) and the annular flow passage 56 (an annulus flow). By way of example, the inner flow passage 54 may be used for transferring production fluids from well 22 to the surface facility 42, e.g. host facility. Simultaneously, the annular flow passage 56 may be used for transferring a different fluid, e.g. a gas or a water injection fluid, from the host facility 42 to the well 22.

During this type of normal operation, production fluid may flow along the inner flow passage 54 through inner pipes 50, inner flow conduits 62, and inner connector conduit 82, as indicated by arrow 144. Valves 96 and 98 remain open to accommodate the flow of production fluids along inner flow passage 54. Simultaneously, a different fluid, e.g. gas and/or water, may flow along annular flow passage 56 including through primary annulus bypass conduit 104 as indicated by arrows 146. Valves 106, 108, and 110 remain open to accommodate this flow of gas and/or water. Additionally, valve 102 may be open to enable monitoring of parameters such as pressure and temperature via sensor 100.

If gas lift injection is desired, valves 126 and 132 may be opened while valve 128 remains closed to enable flow of gas lift fluids as indicated by arrows 148. In this embodiment, valve 132 may be a gas lift annulus-to-bore injection valve which can choke the flow rate and adjust the injection pressure of the gas at this point. If injection gas is desired at a different location, some of the gas may be diverted through valve 108, 110 and 106 to the downstream annulus and next injection point. Additionally, if the chemical injection along inner flow passage 54 is desired, a suitable flow line, e.g. flow line 48, may be coupled with chemical injection connection 84 and valve 88 may be opened to enable injection of desired chemicals, e.g. simultaneous injection of chemicals.

Similarly, if fluid sampling is desired, valves 142 and 138 may be temporarily opened to enable collection of sample fluid routed along conduit 136. Accordingly, the control system 66 may be used to control the various flow control devices, e.g. valves, of each station 40 so as to enable performance of a variety of functionalities in parallel to the normal flow of production fluids and/or other fluids such as water or gas.

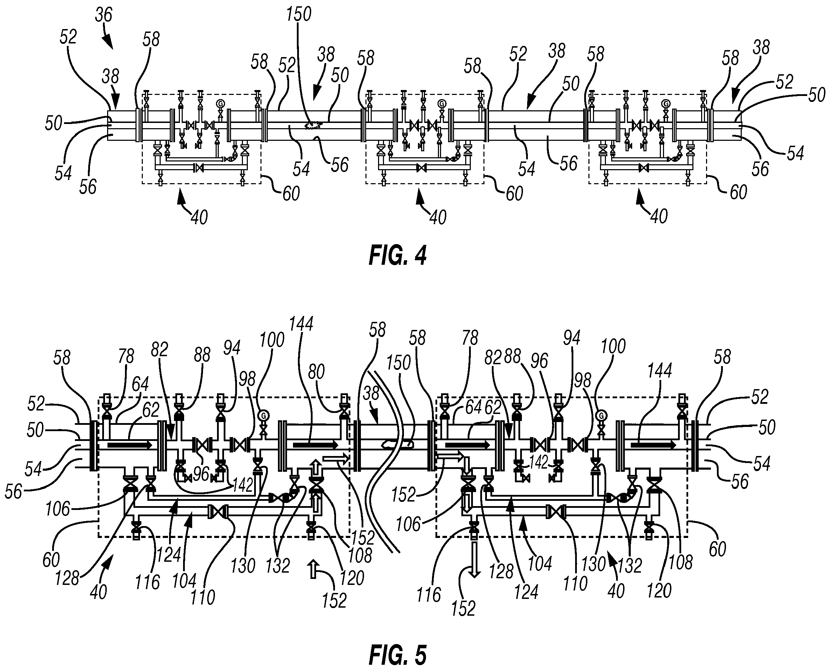

In the event a plug 150, e.g. a hydrate formation, occurs in the pipe-in-pipe system 36, e.g. within one of the inner pipes 50, as illustrated in Figure 4, the adjacent stations 40 may be controlled and operated to facilitate removal of the plug 150. When a plug 150 is formed, the pressure/temperature sensors 100 on opposite sides of the plug 150 are able to detect the plug 150. If several plugs 150 form in different locations, the data history from sequential sensors 100, e.g. pressure/temperature sensors, can be used to indicate which plug 150 formed first so that this plug may be dealt with first. The data from sensors 100 may be sent via signals transmitted through a cable or other communication line (wired or wireless) to control system 66 which may be located at least in part on surface intervention vessel 46, on an autonomous underwater vehicle, on surface facility 42, and/or at other suitable locations. The data may be used to determine the precise location of the hydrate plug so that an operator may initiate a remedial process.

For example, the pertinent annular flow passage 56 may be isolated and depressurized combined in parallel with chemically preserving the bore/inner flow passage 54 on both sides of the hydrate plug 150. Removal of the hydrate plug 150 also can be accomplished through two operations involving depressurization and heating of the affected section of inner flow passage 54. Additionally, a chemical injection may be used in parallel to prevent subsequent hydrate plug growth downstream of the affected area.

The remedial process may be initiated by attempting to remove the hydrate plug 150 through depressurization of inner flow passage 54 on both sides of the plug 150, if possible. If depressurization does not successfully remove the hydrate plug 150, the operator may proceed by isolating the pertinent annular flow passage 56 of the pipe-in-pipe section 38 at which the plug 150 has formed. This isolation enables circulation of hot fluids (see Figure 5) to be initiated around the inner pipe 50 which is plugged by hydrate plug 150 and to thus increase the temperature within inner pipe 50 to a level above the hydrate formation value.

Isolating the annular flow passage 56 of the affected pipe-in-pipe section 38 may be achieved by closing the annulus isolation valves in both stations 40 located at the right end and the left end of the pipe-in-pipe section 38 containing the hydrate plug 150. For example, the valves 106, 108, 110, 116, 120, 128 of the upstream station 40 and downstream station 40 may be closed. The inner flow passage 54 on both sides of the affected pipe-in-pipe section 38 may be kept open to allow the flow of production fluid along this interior bore/passage to continue after removal of the hydrate plug 150.

While the appropriate annular flow passage is isolated, an operator may start injecting hydrate inhibitor chemicals into the inner flow passage 54 through connection 84 and valve 88 of the station 40 located downstream of the pipe-in-pipe section 38 containing the hydrate plug 150. This process may be done immediately after production is shut-in or at the end of a no touch time so as to prevent hydrate plug growth. Fluid displacement in a topside direction may be possible because isolation valves 96, 98 remain open.

To prevent more hydrate formation upstream of the plug 150 during the production shut-in, a loop preservation may be started by flushing fluid between the hydrate plug 150 and a corresponding manifold with a suitable fluid such as methanol or glycol. This may be done at an appropriate injection rate through valve 88 in the station 40 located upstream of the plug 150. Returns of the displaced fluids from the inner flow passage 54 can be routed to, for example, the surface host facility 42 through an available return point, such as another production line connected through a common manifold, another service line, an umbilical, or a pigging loop.

Depressurization of the pertinent portion of annular flow passage 56 may be accomplished through valve 128 in the station 40 located at the right end of the pipe-in-pipe section 38 containing the hydrate plug 150 and through valve 130 which connects the annular flow passage 56 to the inner flow passage 54 downstream of the hydrate plug 150. After depressurization, the pressure in the corresponding annular flow passage 56 is generally equivalent to the pressure in the inner flow passage 54. The gas lift valve 132 may remain closed during this operation.

With additional reference to Figure 5, an arrangement for circulating hot fluid, e.g. hot dead oil, through the annular flow passage 56 around the affected inner pipe 50 is illustrated. The hot fluid for heating the inner pipe 50 and hydrate plug 150 may be provided by intervention vessel 46. For example, the hot fluid from intervention vessel 46 may be pumped through flexible hoses, e.g. flow lines 48, which are connected to stations 40 located on both sides of the plug 150 (see Figures 4 and 5). One of the flow lines 48 may be used for injection and the other for return of the fluids back to the intervention vessel 46. It should be noted that the intervention vessel 46 may be one vessel handling the injection and return flow lines 48. However, the intervention vessel 46 also may comprise a plurality of vessels, e.g. two vessels, with one vessel handling injection through the injection flow line 48 and a second vessel receiving the displaced fluid through the return flow line 48. The arrangement may depend on the distance between the stations 40 and the length, size and weight of the flow line(s) 48. The flow lines may be insulated to minimize heat losses during the operation.

The hydraulic power and/or electrical power provided to open and close the desired valves can be provided according to control system 66 and/or by operator intervention. By way of example, the hydraulic and/or electrical power may be provided via an umbilical or cable routed to the surface or by a remotely operated vehicle (ROV) which stabs into an ROV operating panel associated with the corresponding station or stations 40. According to one embodiment, an ROV is used to stab into an ROV panel so as to connect multiple hoses and equalization loops of an intervention loop in communication with the intervention vessel 46. This allows the desired transfer of fluids between the intervention vessel 46 and the subject station or stations 40. The appropriate sensors 100, e.g. pressure gauges, may be used to check and confirm a desired circulation pressure.

According to the illustrated embodiment, the appropriate hoses/flow lines 48 may be coupled to circulation valve 120 on one side of the hydrate plug 150 and to circulation valve 116 on the other side of the hydrate plug 150. The connections may be made to enable circulation of the hot fluid through the desired portion of the annular flow passage 56 in the production flow direction, as represented by arrows 152 in Figure 5.

The hoses/flow lines 48 may be filled with the circulation fluid prior to coupling with the stations 40 to prevent pumping of air into the system. As the hot fluid is injected into the desired portion of annular flow passage 56, the temperature of the hot fluid is sufficient to raise the temperature within the corresponding inner pipe 50 above a hydrate formation temperature level estimated according to production conditions and fluid properties. Additionally, the volume of the hot fluids used to fill the annular flow passage 56 may be calculated according to the sizes of the pipes used in the pipe-in-pipe system 36. Gas in the annular flow passage 56 of the affected area may be purged to the intervention vessel 46 through the return hose/flow line 48.

Once the estimated volume of hot fluid has been pumped to fill the appropriate region of annular flow passage 56, valves 128 and 130 of the station 40 downstream of plug 150 may be closed to allow circulation of the hot fluid through the annulus region in a closed loop (see arrows 152). It should be noted valves 106 and 116 of the station 40 located downstream of plug 150 and valves 108 and 116 of the station located upstream of the plug 150 remain open to enable the circulation.

Gas lift flow may be maintained downstream of the plug 150 through the corresponding valves 130, 132. Additionally, inhibitor chemical injection may be maintained through valve 88 to maintain a fluid motion towards the surface host facility 42.

The circulation 152 may be continued until an indication is obtained via upstream and downstream sensors 100 that the hydrate plug 150 has melted. Melting of the plug 150 is associated with a change in pressure of the upstream section followed by an equalization of pressures on both sides of the plug 150, thus indicating the melting of the plug and normalization of a flow of production fluids as indicated by arrows 144. At this stage, the hot fluid circulation from the intervention vessel 46 may be stopped and valves 116, 120 closed in the stations 40 upstream and downstream of the affected section.

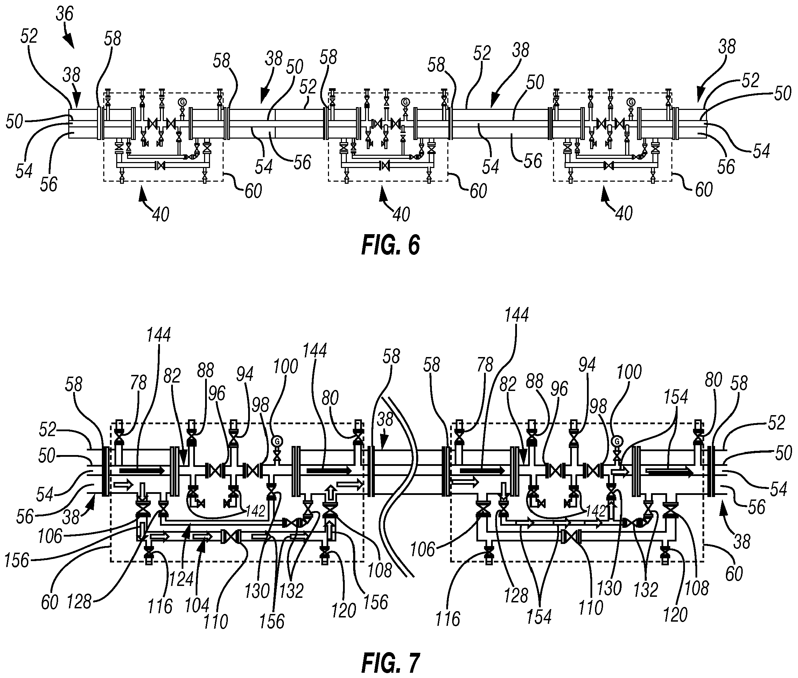

An embodiment utilize flushing of hot fluids out of the annulus to restore normal operation is illustrated in Figures 6 and 7. To flush the hot circulation fluid out of the annulus region, the hot fluid is pushed from the pertinent region of annular flow passage 56 into the inner flow passage 54 downstream of the section that was affected by plug 150. The hot fluid may be pushed by injecting gas from an annulus region upstream of the affected section to allow the hot circulation fluid to be co-mingled with the production fluid flowing to the host facility 42. The gas used to push the hot circulation fluid is flowed from the pipe-in-pipe section 38 upstream of the region which had been affected by plug 150.

According to one operational example of a flushing procedure, valve 132 in the station 40 located downstream of the affected section is closed to stop subsequent gas injection. On the same downstream station 40, valve 128 is opened and the open position of valve 130 is confirmed to enable circulation of the hot fluid from the annular flow passage 56 and into the inner flow passage 54 of inner pipe 50, as indicated by arrows 154 in Figure 7.

On the station 40 upstream of the affected section, valves 106, 108 and 110 may be opened to allow gas introduced into the annulus to flow through the primary bypass 104, as indicated by arrows 156. The flow of gas pushes the hot fluid from the annulus of the affected section to the inner flow passage 54 at the downstream station 40 (see arrows 154). The time for displacement may be calculated and the flow of gas may be continued until complete removal of the hot circulation fluid.

At this stage, valve 128 of the downstream station 40 may be closed to stop the displacement. If desired, gas lift injection may be reinitiated by opening valve 132 in the downstream station 40. Additionally, valves 106, 108 and 110 in the downstream station 40 may be opened to allow pressure equalization in the annulus. At this stage, normal operation may be continued by returning the valves on both upstream and downstream stations 40 to the normal flow positions illustrated in Figures 2 and 3.

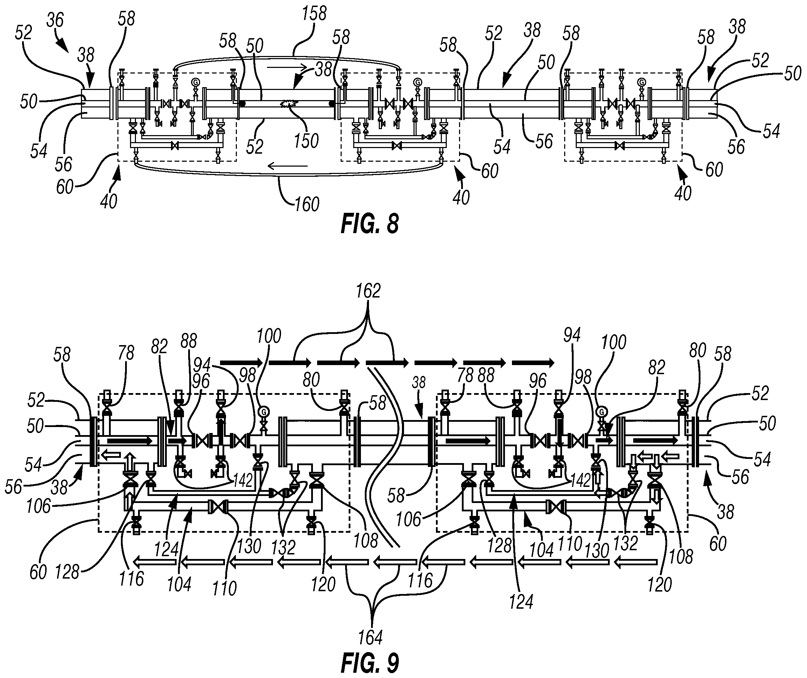

Referring generally to Figures 8 and 9, an example is illustrated in which the affected pipe-in-pipe section 38 is bypassed if the plug 150 cannot be removed. In case oil or other fluid harmful to the environment is used for circulation, the fluid should be displaced to the inner flow passage 54 to allow safe disconnection and abandonment without release of contaminants. According to an operational example, the plug 150 may be isolated by closing valves 98, 130, 132, 108, 110, 120 on the station 40 located upstream of the affected section. Additionally, valves 88, 96, 128, 142, 106, 116, 110 may be closed on the station 40 located downstream of the affected section. In some embodiments, a plug may be injected into the conduit 74 at valve 78 of the downstream station 40 and another plug may be injected into conduit 76 at valve 80 of the upstream station 40. The plugs may be used to further help prevent escape of fluid to the environment.

A bypass hose 158 (or other suitable conduit) may be used to couple inner flow passages 54 of upstream and downstream stations 40. The bypass hose 158 may be connected between the upstream valve 94 of the upstream station 40 and the downstream valve 94 of the downstream station 40 as illustrated in Figure 8. Furthermore, an annulus bypass hose 160 (or other suitable conduit) may be used to couple annular flow passages 56 of upstream and downstream stations 40. The annulus bypass hose 160 may be connected between the valve 116 of the upstream station 40 and the valve 120 of the downstream station 40.

The subject valves may then be opened to enable a production fluid flow (bore flow), as represented by arrows 162, and an annulus fluid flow, as represented by arrows 164 in Figure 9. When the valves are opened for the bypass flow along both the inner flow passage 54 and the annular flow passage 56, the systems are able to equalize for both production and gas lift to thus accommodate normal operation. At this stage, chemical injection upstream of bypass hose 158 may be initiated by coupling a chemical injection line at the corresponding valve 88.

Accordingly the pipe-in-pipe system 36 may be used in performing a wide variety of functions both in parallel and sequentially. For example, the functionality of stations 40 combined with the pipe-in-pipe sections 38 enables parallel management of multiple flow assurance functionalities in the overall pipe-in-pipe system 36. Depending on the parameters of a given operation, fluids in the pipe-in-pipe system 36 may be monitored along both the bore (inner flow passage 54) and the annulus (annular flow passage 56) using sensors 100 by actuating the appropriate valves of the corresponding stations 40. This functionality may be performed in parallel with other functionalities of the pipe-in-pipe system 36.

Additionally, gas may be injected from the annulus flow passage 56 into the inner flow passage 54 using various valve arrangements, such as valve arrangements described above, and this functionality also may be performed in parallel with other functionalities. Chemicals also may be injected from an external source into the inner flow passage 54 of the pipe-in-pipe system 36 using valve arrangements described above and, again, this functionality may be performed in parallel with other functionalities.

If flow assurance problems arise, the appropriate portions of the inner flow passage 54 and/or annular flow passage 56 may be isolated by actuating the appropriate valves as described above. Furthermore, an intervention technique may be used to circulate hot fluids into an annulus around the portion of inner pipe 50 when flow assurance problems occur within the inner pipe 50 by appropriately actuating the valves as described above. This ability enables removal of, for example, hydrate plugs 150 by utilizing heat exchange between an annulus region and an inner flow passage region.

If flow assurance problems persist in a region of the pipe-in-pipe system 36, independent flexible hoses or other conduits may be installed between stations 40 to effectively bypass an inner flow passage region between those stations 40. Similarly, fluids may be diverted into independent flexible hoses or conduits installed between stations 40 to enable bypassing of an annulus flow passage region between those stations 40. In some embodiments, inflatable plugs may be positioned through or otherwise in cooperation with valves to provide secure isolation so as to protect the environment during retrieval of an affected section of the pipe-in-pipe system 36.

Various station bypasses as well as added bypasses may be used to enable bypassing of specific portions of a given station and/or specific portions of the overall pipe-in-pipe system 36 with respect to fluid flows along the inner flow passages and/or annular flow passages. In some embodiments, fluids flowing along inner flow passage 54, e.g. production fluids, may be diverted to a sampling collection region to enable extraction of fluid samples.

Furthermore, the stations 40 may be energized hydraulically and/or electrically via batteries, via power cable, via umbilical connection, via ROV panel, and/or via other marine energy sources to enable hydraulic and/or electric actuation of the various valves or other components of the stations 40. The control system 66 also may comprise many types of control systems and control components. By way of example, the control system 66 may comprise a subsea control module (SCM) for monitoring the integrity of the stations 40 and for controlling components of the stations 40. The control system 66 also may be programmed to provide redundancies, component/valve actuation procedures, sampling procedures, integrity tests between the station and remotely operated vehicles or autonomous underwater vehicles, or to control other activities of the pipe-in-pipe system 36. Each of these activities/functionalities may be performed in parallel with other functionalities of the pipe-in-pipe system 36.

Depending on the specifics of a given use, the shape, size, and features of pipe-in-pipe system 36 may be adjusted. For example, different numbers of pipe-in-pipe sections 38 and different numbers of stations 40 may be used in a given system according to the parameters of the hydrocarbon production operation or other subsea operation. Additionally, the types of component connectors, valves, sensors, and other components may be selected according to the operational parameters. For example, the valves may be hydraulically operated and/or electrically operated. Furthermore, the various conduits connecting valves and other components of the stations 40 and overall pipe-in-pipe system 36 may be in the form of tubing, e.g. pipes, integral flow paths within certain station structures, or various other types of conduits for enabling flow of fluid between the appropriate components.

Additionally, the components of each station 40 may be mounted on various types of skids 60 or other support structures. It should also be noted that certain reference numerals associated with conduits of stations 40 and provided in Figure 3 have not been provided in Figures 5, 7, 9 due to space constraints. However these latter figures should be considered to include the same or similar conduits used between valves and other station features.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. A system for use in a subsea operation, comprising:
a pipe-in-pipe system having:
a plurality of pipe-in-pipe sections, each pipe-in-pipe section comprising an inner pipe able to conduct fluid flow along an inner flow passage and an outer pipe to enable flow along an annular flow passage extending between the inner pipe and the outer pipe; and
a plurality of stations to provide flow assurance with respect to flows of fluids along the pipe-in-pipe system, each station being fluidly coupled to at least two of the pipe-in-pipe sections to enable flow along the inner flow passage and the annular flow passage, each station having a plurality of valves and flow conduits to enable selective flow of different fluids along a plurality of different flow paths to provide multiple flow assurance functionalities.

2. The system as recited in claim 1, wherein the pipe-in-pipe system further comprises a plurality of sensors to monitor flows of fluid.

3. The system as recited in claim 2, wherein the plurality of sensors comprises at least one sensor on each station.

4. The system as recited in claim 1, wherein the plurality of valves of each station may be adjusted to establish a gas injection flow path from the annular flow passage to the inner flow passage in parallel with at least one other flow functionality.

5. The system as recited in claim 1, wherein the plurality of valves of each station may be adjusted to establish a chemical injection flow path into the inner flow passage in parallel with at least one other flow functionality.

6. The system as recited in claim 1, wherein the plurality of valves of each station may be adjusted to isolate a flow assurance problem occurring in at least one of the inner flow passage and the annular flow passage.

7. The system as recited in claim 1, wherein the plurality of valves of each station may be adjusted to establish a hot fluid circulation flow path to enable removal of a plug along the inner flow passage.

8. The system as recited in claim 1, wherein the pipe-in-pipe system further comprises independent flexible conduits connectable to sequential stations of the plurality of stations to enable bypassing of a plug.

9. The system as recited in claim 1, wherein the pipe-in-pipe system comprises a sampling section for obtaining fluid samples from fluid flowing along the inner flow passage.

10. The system as recited in claim 1, wherein the plurality of valves of each station may be selectively adjusted to provide a flow assurance functionality comprising injection of gas from the annular flow passage to the inner flow passage.

11. The system as recited in claim 1, wherein the plurality of valves of each station may be selectively adjusted to provide a flow assurance functionality comprising chemical injection from an external source into the inner flow passage.

12. A method, comprising:
providing each station of a plurality of stations with a network of valves and conduits;
coupling each station to a plurality of pipe-in-pipe sections to form a pipe-in-pipe system at a subsea location;
producing a production fluid along an inner flow passage of the pipe-in-pipe system;
simultaneously flowing at least one of a gas and water along an annular flow passage of the pipe-in-pipe system; and
actuating the valves to a plurality of different flow positions to provide different flow assurance functionalities upon formation of a plug in the pipe-in-pipe system.

13. The method as recited in claim 12, further comprising mounting the network of valves and conduits on a skid for each station.

14. The method as recited in claim 12, wherein actuating comprises actuating the valves to inject gas from the annular flow passage to the inner flow passage and to inject a chemical from an external source into the inner flow passage.

15. The method as recited in claim 12, wherein actuating comprises actuating the valves to inject a chemical from an external source into the inner flow passage and to circulate a hot fluid proximate the plug.
